# EUROPEAN PATENT APPLICATION

(11) **EP 4 001 898 A1**
(43) Date of publication of application: **25.05.2022**
(21) Application number: 20383004.7
(22) Date of filing: 18.11.2020
(51) Int. Cl.: G01N 21/01, G21F 7/04, G01N 21/03, G01N 21/31, G01N 21/21, G01N 21/64, B08B 15/02, B25H 1/20

(54) **PORTABLE SAFETY CABIN FOR OPTICAL ANALYSIS OF SUBSTANCE SAMPLES**

(71) Applicant: Universidad de Sevilla, 41013 Sevilla (ES); Servicio Andaluz de Salud, 41071 Sevilla (ES); Dirección General de la Policía, 41011 Sevilla (ES)
(72) Inventor: GÓMEZ GONZÁLEZ, Emilio, 41013 Sevilla (ES); GUERRERO CLARO, Manuel, 41013 Sevilla (ES); MUÑOZ GONZÁLEZ, Francisco J., 41013 Sevilla (ES); PARRILLA GIRALDEZ, Rubén, 41013 Sevilla (ES); MÁRQUEZ RIVAS, Javier, 41071 Sevilla (ES); FERNÁNDEZ LIZARANZU, Isabel, 41071 Sevilla (ES); NAVAS GARCÍA, José Manuel, 41011 Sevilla (ES); GARCÍA ROMERO, Fernando, 41011 Sevilla (ES); ARROYO RODRÍGUEZ-PRAT, M. Alberto, 41011 Sevilla (ES); CELA SANTOS, Marcos, 41011 Sevilla (ES); PARDO MESA, Manuel Ángel, 41011 Sevilla (ES); ROA RATIA, Miguel Ángel, 41011 Sevilla (ES); CALABOZO DIEGUEZ, David, 41011 Sevilla (ES); BADIA VERA, Pedro, 41011 Sevilla (ES); ESCRIBANO LEIVA, Francisco, 41011 Sevilla (ES)
(74) Representative: Pons

(57) **Abstract**

The present invention relates to a portable safety cabin for optical analysis of substance samples, which is transportable and specifically adapted to perform optical analysis techniques on biological and chemical samples that may be harmful. The cabin comprises an analysis chamber (1) with controllable transparency intended to house the substance, limited by a base (2), four vertical panels (4,5,6,7) and a ceiling panel (8). The cabin comprises a frame (16) housed in the analysis chamber (1) and resting on the base (2) which supports the vertical panels (4,5,6,7) and the ceiling panel (8), which is equipped with at least one securing bar (17) which extends between two of the side panels (4,5,6,7), and supports (18) movably connected to the bar (17) intended to support optical analysis equipment (19) and lighting equipment (49).

## Description

### OBJECT OF THE INVENTION

The present invention relates to a portable safety cabin for optical analysis of substance samples, which is transportable and specifically adapted to perform optical analysis techniques on biological, chemical or other types of samples that may be harmful.

Specifically, the safety cabin is designed to perform analyses and measurements by means of various types of optical techniques, particularly those based on recording and acquiring images by means of an analysis chamber and lighting systems which can be used to detect and identify contaminants, toxic, biological or chemical agents without endangering the operators performing the study or the environment.

### BACKGROUND OF THE INVENTION

Currently, safety cabins intended to be used as equipment in biological and chemical laboratories are known in the state of the art. They are closed and sometimes ventilated spaces which enable the operator to act safely with harmful substances. They are especially used for handling dangerous or toxic products, such as, for example, chemical substances or for analysing viruses, bacteria, etc.

Currently there are various types of safety cabins that seek to protect the user in different environments, some of them even being portable. All of these cabins provide a safe space for the worker in typical substance treatment tasks, such as preparing solutions, cultures, etc. These types of cabins are usually fixed, although there are some types that are portable, such as transportable bags which have openings for introducing gloves.

However, such cabins, both the fixed and portable ones, do not enable optical analyses to be performed since it is not possible to handle and position the necessary devices, such as analysis chambers, lighting systems, adjustable sample positioners and others, in the controlled lighting conditions required while maintaining the safety of the operator.

### DESCRIPTION OF THE INVENTION

The present invention relates to a portable safety cabin for optical analysis of substance samples, wherein the cabin comprises a partially transparent analysis chamber intended to house the substance, limited by a base intended to rest on a support surface, four vertical panels which extend from the base and a ceiling panel connected to the vertical panels.

The safety cabin comprises a work tray resting on the base and housed in the analysis chamber intended to support the substance, a gas inlet valve connected to one of the vertical panels intended to be connected to an external gas source and introduce gas into the analysis chamber and a gas outlet valve connected to one of the vertical panels through which a contaminated gas is evacuated to the outside of the analysis chamber.

The safety cabin is equipped with a transfer chamber through which the substance is introduced into the analysis chamber and it is equipped with an opening arranged in one of the vertical panels communicating the inside and outside of the analysis chamber. The cabin comprises at least two access cavities which cross through one of the vertical panels and a glove housed in the analysis chamber which extends from the access cavity.

The safety cabin further comprises a frame housed in the analysis chamber and which is resting on the base which supports the vertical panels and the ceiling panel, which is equipped with at least one securing bar which extends between two of the side panels, opposite from each other, and is parallel to the base and supports movably connected to the bar intended to support optical analysis equipment.

The safety cabin makes it possible to perform trials and tests using optical techniques to detect and evaluate contaminants, toxic, biological and chemical agents with all the safety measures necessary to isolate the contents thereof from the outside. Thanks to the movable supports, the optical analysis and lighting equipment can be easily installed inside the cabin and the position thereof can be adjusted according to the requirements of the different optical techniques.

The location of the cabin can vary greatly, from a fixed laboratory to a mobile platform, the transfer and installation thereof being quick and simple. Potential applications in the industry focus on the optical analysis of hazardous substances, using a sample of the substance to do so, in environments such as scenarios of leakage or spills of potentially dangerous or contaminating products, the inspection of facilities such as chemical plants, refineries and the evaluation of contamination of the natural environment. In all these cases, the cabin object of this invention makes it possible to perform analyses *in situ* by means of mobile units, since it is easily transportable and adaptable both to vehicles and to adapted spaces, for example, mobile or field laboratories.

Preferably, the panels are rigid and have sizes suitable both for the space wherein they will be located and for the equipment that will go inside.

Preferably, the vertical panels can comprise two side panels facing each other, a front panel between the side panels and a rear panel facing the front panel. The front panel can comprise a fixed sector which extends from the base and a door which can be connected to the fixed sector and which enables the opening and airtight closing of the analysis chamber. The door can be collapsible with respect to an edge of the ceiling panel, to which they are joined by means of hinges, such that it can be completely opened outwards, rising in the vertical direction. In this manner, access to the inside of the cabin is very comfortable since the door can have a large size and, thanks to gravity, ensuring that it is always closed when nobody is holding it. In a closed situation, the door can be inclined with respect to the fixed sector, about 20° with respect to an axis perpendicular to the base. This inclination is optional but interesting depending on the type of handling of the samples.

Alternatively, the front panel can be completely detached from the side panels and the ceiling panel, in a removable manner. In this configuration, the joining to the side panels and the ceiling panel is performed by means of clips for airtight screens.

The usefulness of the door is the direct access to the analysis chamber under conditions without substance samples, in order to clean it or assemble equipment and instruments.

Preferably, the cabin can comprise at least one lock connected to the door and to one of the side panels or to the fixed sector which enables the hermetic closing of the analysis chamber, since the door closes against the side panels, the fixed sector and the ceiling panel and keeps it in this position.

The design as a closed cabin ensures the airtightness of the inner space as an analysis chamber, since direct contact with the outside is through the front door or the opening located in one of the panels of the transfer chamber, both being secured with hermetic closings and profiles.

The configuration of the front panel enables different versions to be had with different numbers and positions of the gloves for operators on the outside, gas inlet and outlet points, cabling, sensors and other elements, such that the most suitable front panel can be chosen for each scenario and use conditions of the cabin, and it enables the cabin to be placed in smaller spaces, such as the inside of small vehicles, wherein a collapsible front door could require a large space for the complete opening thereof.

This front door also has handles for the comfortable handling thereof and, in the completely removable configuration, in order to enable the removal and installation thereof. The edges of the side panels, ceiling panel and the base in contact with the door are covered with a sealing element such as neoprene strips or edges, rubber gaskets or similar, suitable according to the type of materials and samples that are going to be used. The surfaces of the panels, and therefore of the inside of the analysis chamber, ensure the impermeability and easy decontamination thereof since they are smooth surfaces.

The samples of the substances are preferably introduced from the opening arranged in said transfer chamber which functions as an air lock or through the front panel.

The frame can comprise a first quadrangular tubular support resting on the base and which contacts the four vertical panels, at least four vertical bars which extend vertically from the lower bars and are facing the side panels, and a second quadrangular tubular support which joins the vertical bars to each other and they support the ceiling wherein the securing bar is arranged between two vertical bars and is movable in a longitudinal direction thereof. Thus, the frame maintains the shape of the cabin and reinforces the joints between them, enabling the securing bar to be arranged between the side panels. The vertical movement of the securing bar, as well as the horizontal movement of the supports on the securing bar, are enabled. The vertical bars are preferably three bars facing each side panel, such that there are six vertical bars. Thus, the frame maintains the shape of the cabin and reinforces the joints which is what enables the securing bar to be arranged between the side panels. Additionally, it enables the vertical and horizontal movement of the optical and lighting equipment. Preferably, the bars of the frame are metal, cylindrical and hollow, with a circular cross section with an outer diameter of 40 mm, and the fastening and adjustment screws are M5 screws.

Preferably, the transfer chamber can comprise an outer box arranged on the outside of the analysis chamber and which extends from the opening towards the outside of the analysis chamber and an inner box which extends from the opening towards the inside of the analysis chamber. The outer box can be equipped with an outer closing lid and the inner box can be equipped with an inner closing lid. Thanks to the lids, any material can be introduced inside the analysis chamber in a safe manner. The lids have hermetic closings which ensure the airtightness thereof and, therefore, that of the inside of the analysis chamber. With this configuration, the operator who, from the outside, wants to introduce a sample or element inside the cabin must open the lid or door of the outer box, introduce the sample and close the same outer lid. The transfer chamber is preferably transparent so that the operator can easily handle the sample. Then, from inside the analysis chamber, the inner lid must be opened, the sample or element located inside the outer box must be accessed through the opening in the side panel, depositing it on the work tray inside the cabin, and once again closing the lid or door of the inner box. This "transfer chamber" system by means of two boxes communicated on the outside and inside of the analysis chamber works as an access air lock which prevents the possible contamination inside of the cabin from going to the outside, for which reason a negative pressure has been generated.

The cabin can be equipped with a closing sensor in the vicinity of the outer and inner lids which detects whether the lids are open or closed and lights which receive the signal from the closing sensor and turn on depending on the signal received. Preferably, there are two lights, for example, LEDs, a green one which turns on if the lids are closed and a red one which indicates if any of the lids are open and that there may be a safety leak. Thus, the transfer chamber indicates the opening and closing by means of LEDs and ensures airtightness according to current regulations.

Safety gloves for handling substances prevent the hands of the operators from directly touching the contents inside the cabin. Gloves can preferably be ambidextrous and since there may be more than two access cavities, several operators are able to work at the same time, for example, from the front panel and the side panels, either controlling the technical equipment or handling the toxic substances. The features of the gloves, such as thickness, material and rigidity, are suitable for the substances and equipment that will be handled inside the cabin. They are hermetically sealed on the inside of the cabin and can be easily replaced.

The analysis chamber is made of a smooth, transparent material, for example, methacrylate or polycarbonate, although it is possible to prevent or regulate the inlet of light therein by coating the surfaces thereof with outer light-regulating panels, which regulate both the intensity within the analysis chamber as well as the colour by regulating the wavelength transmitted towards the inside of the analysis chamber. The outer panels can be, on the one hand, opaque or partially transparent sheets for some colours or, on the other hand, photochromic or photochromatic panels with adjustable transparency, also called electrochromic or smart window panels.

The vertical panels can comprise projections in the vicinity of the base wherein the outer light-regulating panels are hooked.

Due to the features of the technical equipment used, controlling the light is extremely important, which is improved thanks to the installation of systems which isolate outside light. This ensures that they can be installed in a removable manner on the outside of the chamber during the time the tests are performed.

The external sheets for regulating light that enters the cabin can be made of plastic, another material with a similar function, such as cardboard or fabric, and are equipped with a first fastening element and the panels comprise a second fastening element on the outside of the cabin, able to be connected to the first fastening element. These fastening elements may be clasp-type fastening elements, hook-and-loop or button closings and the sheets may have complementary holes or openings which enable an easily removable fastening. The sheets can be opaque or transparent which filter only colour. These sheets have the shapes necessary to completely cover the front, side and upper surfaces of the cabin. The external sheets can comprise at least one rectangular slot which enables the inside of the analysis chamber to be viewed.

When the cabin is completely covered with outer panels, in order to be able to observe the inner space thereof at all times, a video camera with a visible image and, optionally, a thermal camera are provided, which enable the inside to be viewed on one or more external screens in real time.

At least the vertical panels and the ceiling are transparent and are preferably made of a plastic material, for example methacrylate or polycarbonate.

The cabin can comprise a rotating support connected to the work tray and to the base, which enables the rotation of the work tray in order to adapt the position of the substance. Alternatively, the tray can be fixed. In the case that a waste collection tray is provided, the rotating support can be between both trays.

The work tray can preferably be circular and is divided into two work areas. The sample of the substance is prepared in one of them and the rotation of the platform, preferably circular, enables it to be placed in the area suitable for the optical analysis. The work tray can comprise notches which indicate the optimal position for the optical analysis. This area refers to the area with suitable lighting and location for the optical techniques used, for example, to be within the field of vision captured by the analysis chamber. The other area can be used to deposit additional elements which are useful for preparing samples. The work tray can also be adjustable in height, in order to facilitate the work of the operator. Alternatively, the work tray can be fixed, preferably rectangular in shape, and the operator performs the tasks for preparing samples on it.

The lighting of the work area is performed through lighting equipment such as light sources and filters of the types suitable for the different optical techniques. Preferably, it consists of LED emitters, hermetically installed against dust and moisture. Depending on the type of samples to be analysed and the optical techniques required, these lights can also be explosion-proof.

Likewise, it comprises a height-adjustable platform connected to the base and intended to rest on the support surface, so that the operator can work in a suitable position. This platform can be, for example, a table with extendable or folding legs. These legs additionally function as a securing, which can be complemented by the use of straps which secure the cabin to the space wherein it will be installed, for example, the inside of a vehicle such as a truck or van.

The cabin can comprise a partially curved collection tray intended to collect waste of the substance and which is resting on the base, wherein the central area is flat and rests on the base and the edges of the tray are curved. This tray is intended to collect all substances that may fall from the work tray.

The cabin can comprise an electrical power strip connected to the outside of the analysis chamber and intended to be connected to a power source and to the optical analysis and lighting equipment. Thus, the power of all elements that need electrical power is ensured, such as the optical analysis equipment or the decontamination system. The support can be a strip-type support connected to a side panel of the analysis chamber. The electrical power can be supplied by connection to a mains network or by connection to an autonomous power system by means of batteries.

The cabin can comprise inner switches housed in the analysis chamber and outer switches on the outside of the analysis chamber, wherein the switches are connected to the strip and are intended to be connected to the optical analysis equipment, such that the activation thereof can be done both outside the cabin and inside the cabin.

The cabin can comprise transportation handles which extend from two of the vertical panels opposite from each other. Thus, the loading of the cabin and the transportation thereof are facilitated. Additionally, it can comprise anchors connected to the ceiling and safety straps intended to be connected to an external structure which ensure the correct fastening thereof.

One of the main objectives of this invention is to be able to perform analysis *in situ,* in any type of scenario, and it being possible to adapt the measurements of the construction thereof to different spaces wherein it may be of interest to place it, such as in the uncovered rear trays of all-terrain vehicles, inside of vans, trucks, helicopters and others. Support surface is understood as work tables, floors, the aforementioned rear vehicle trays and any support surface whereon the cabin is to rest. For this reason, it has been designed as a system that is lightweight and easy to move. The cabin includes a suitable number, for example, four transportation handles in the lower portion in order to enable the transportation thereof by hand by one or more people according to the dimensions thereof.

The valves can preferably comprise a shut-off valve both on the inside and outside of the compartment which enable or restrict both the inlet and outlet of the gases in a safe manner, such that they can be actuated from the inside or outside of the analysis chamber.

Additionally, the system is configured to comprise a computer intended to be connected to the optical analysis equipment by means of a communication system which receives data collected by the optical analysis equipment. The connection can be via remote connection such as Wi-Fi or Bluetooth or by means of a data transmission cable.

The computer is preferably arranged on the outside of the analysis chamber and from which the use of the optical analysis and lighting equipment can be controlled, as well as obtaining and managing the data that is generated. The computer can likewise have the ability to manage the activation of the gas inlet and outlet valves and, if appropriate, temperature, pressure, and moisture sensors, accelerometers or any device that is to be connected.

The optical analysis and lighting equipment enables, for example, recording hyperspectral images, diffuse optical reflectance, polarimetric imaging, fluorescence photographs and other types. The analysis chambers and sensors are fastened on the internal movable bars, with the position thereof being adjustable in height and laterality. The lighting equipment enables the lighting necessary for each type of analysis to be provided to the sample of the substance.

The cabin can comprise a set of sensors connected to the analysis chamber in order to ensure the correct conservation of the sample, as well as the optimal conditions for the analysis thereof. Preferably, the set of sensors is equipped with at least one pressure sensor on the inside of the chamber and one pressure sensor on the outside of the chamber intended to be connected to a microprocessor which measures the pressure difference of the sensors and sends the measurement to a mobile device. The microprocessor compares the pressure difference and checks that the inner pressure is negative, sending this signal to a tablet, mobile phone or similar device through a communication module which enables a wireless connection. The accelerometers detect accelerations or possible accidents or vibrations which may compromise the structural features of the cabin, which is of special interest if the cabin is inside a vehicle, the sensor being connected to a microprocessor.

In this manner, an operator who has a device connected to the microprocessor which receives the signal from the sensors, knows the status of the cabin at all times.

These internal sensors can be additionally temperature, moisture and gas sensors. The results thereof can be viewed on a screen on the front of the cabin or on any device such as computers, mobile phones or screens connected to the microprocessor.

The cabin can have video recording therein, both of images in the visible range and, optionally, of thermal images and the images of both the sample preparation and of the analysis can be retransmitted in real time, enabling photographs of the tests and measurements to be obtained as well. This configuration is especially advantageous when sheets are being used to cover the analysis chamber.

The cabin can have air filtration and have emergency decontamination systems therein by means of sprayed dispersion of a suitable agent wherein the spraying dispersion mechanism for a decontaminating fluid is composed of a tank, a motor, connection tubes and emission valves of the spraying towards the inside of the cabin. Additionally, it can have a decontamination device by means of emitting ultraviolet light (UV) of the appropriate spectral range (UV-C). Both emergency decontamination systems have activation buttons on the inside and outside of the cabin.

The inlet and outlet of gases facilitates producing a negative pressure therein which prevents, in any case, the outlet of the air or vapour contained in the analysis chamber to the outside. Secondly, it enables the inner environment to be sterilised by means of a suitable filter, for example, a High Efficiency Particulate Arresting (HEPA) filter. Third, it enables the introduction of decontaminating gases. In all these cases, the inlet of gases is produced through a tube connected, in each case, to a compressor, an extraction motor with a HEPA filter and a generator or gas tank, with the corresponding opening and closing valves thereof. The lengths of the outer tubes would vary depending on the needs of the location of the cabin. Both the inlet air and the outlet air are filtered by HEPA, which guarantees the protection of both the environment and of the operators and the samples, as they are only in contact with filtered air.

### DESCRIPTION OF THE DRAWINGS

As a complement to the description provided and for the purpose of helping to make the features of the invention more readily understandable, in accordance with a practical preferred exemplary embodiment thereof, said description is accompanied by a set of drawings which, by way of illustration and not limitation, represent the following:
Figure 1 shows a first perspective view of the safety cabin.
Figure 2 shows a second perspective view of the safety cabin.
Figure 3 shows a schematic front view of the safety cabin.
Figure 4 shows a schematic profile view of the safety cabin.
Figure 5 shows a schematic front view of the inside of the analysis chamber.

### PREFERRED EMBODIMENT OF THE INVENTION

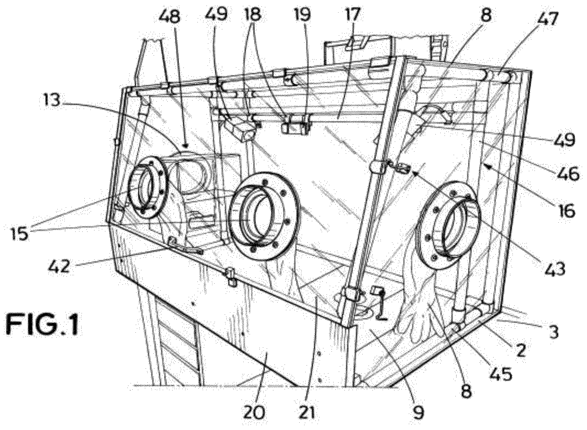

Figure 1 shows a first perspective view of the portable safety cabin for optical analysis of substance samples, according to the present invention. The safety cabin for optical analysis of a substance comprises a partially transparent analysis chamber (1) intended to house the substance, limited by a base (2) intended to rest on a support surface (3), four vertical panels (4,5,6,7) which extend from the base (2) and a ceiling panel (8) connected to the vertical panels (4,5,6,7). The panels (4,5,6,7,8) are preferably made of methacrylate with a thickness of 12 mm. Housed in the analysis chamber (1) is a work tray (9) resting on the base (2) and intended to support the substance.

The safety cabin comprises a transfer chamber (48) through which the substance is introduced into the analysis chamber (1), equipped with an opening (13) arranged in one of the vertical panels (4,5,6,7).

The safety cabin comprises at least one access cavity (15) which crosses through one of the vertical panels (4,5,6,7) and in the embodiment shown three gloves (8) housed in the analysis chamber (1) which extends from the access cavities (15) towards the inside of the analysis chamber (1) and which are preferably ambidextrous, wherein the hands of the operators who are on the outside can be introduced.

In the configuration shown, the vertical panels (4,5,6,7) comprise two side panels (4,5) facing each other, a front panel (6) between the side panels (4,5) and a rear panel (7) facing the front panel (6), wherein the front panel (6) comprises a fixed sector (20) which extends from the base and a door (21) which extends from the fixed sector and is collapsible with respect to the ceiling panel (8). Likewise, it comprises at least one lock (43) connected to the door (21) and to one of the side panels (4,5) or to the fixed sector (20) which enables the door (21) to be closed, wherein the closing is preferably hermetic. This front door (21) also has handles (42) for the comfortable handling thereof.

Likewise, the cabin comprises a frame (16) housed in the analysis chamber (1) and resting on the base (2) which supports the vertical panels (4,5,6,7) and the ceiling panel (8), which is equipped with at least one securing bar (17) which extends between two of the side panels (4,5,6,7), opposite from each other, and is parallel to the base (2) and supports (18) movably connected to the bar (17) intended to support optical analysis equipment (19) and lighting equipment (49).

The frame (16) comprises a first quadrangular tubular support (45) resting on the base (2) and which contacts the four vertical panels (4,5,6,7), composed of four bars, at least four vertical bars (46) which extend vertically from the first tubular support (45) and are facing the side panels (4,5), and a second quadrangular tubular support (47), composed of at least four bars which joins the vertical bars (46) to each other and they support the ceiling (8) wherein the securing bar (17) is arranged between two vertical bars (46) and is movable in a longitudinal direction thereof. The vertical bars (46) can be movable with respect to the tubular supports (45,46).

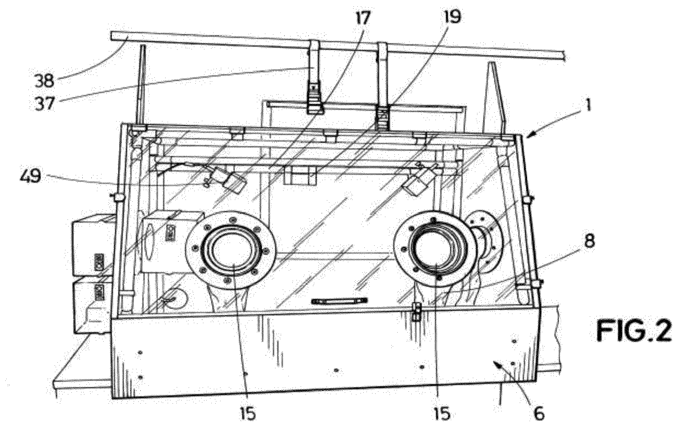

Figure 2 shows a second perspective view of the safety cabin, according to the present invention, wherein the cabin comprises an electrical power strip, not shown in the figure, connected to the outside of the chamber and which is intended to be connected to an energy source and optical equipment (19) and lighting equipment (49).

The cabin is equipped with anchors (36) connected to the ceiling (8) and safety straps (37) connected to an external structure (38) and configured to be connected to the anchors (36).

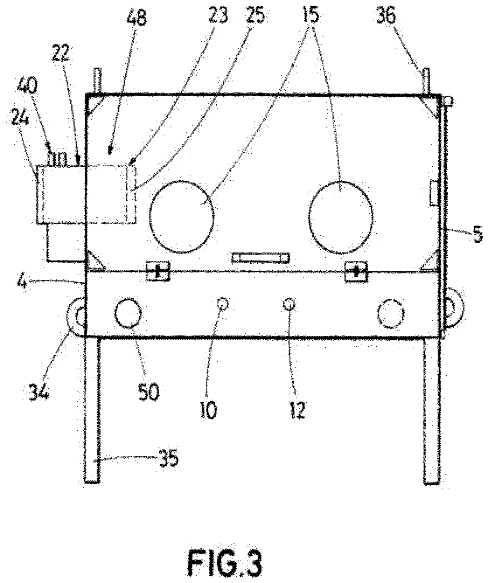

Figure 3 shows a schematic front view of the safety cabin, according to the present invention. It additionally comprises an outer box (22) arranged outside the analysis chamber (1) and which extends from the opening (13) towards the outside of the analysis chamber (1) and an inner box (23) which extends from the opening (13) towards the inside of the analysis chamber (1) wherein the substance is transferred. The outer box (22) is equipped with an outer closing lid (24) and the inner box (23) is equipped with an inner closing lid (25). The cabin has closing sensors in the vicinity of each lid (24,25) which detect whether the lids are open and lights (40) which receive the signal from the closing sensors and turn on depending on the signal received.

The cabin comprises a gas inlet valve (10) connected to one of the vertical panels (4,5,6,7) intended to be connected to an external gas source (11) and introduce gas into the analysis chamber (1) and a gas outlet valve (12) connected to one of the vertical panels (4,5,6,7) through which a contaminated gas is evacuated, coming from the inside, to the outside of the analysis chamber (1).

The cabin comprises inner switches housed in the chamber (1) and outer switches on the outside of the chamber (1), wherein the switches are connected to the strip and are intended to be connected to the optical equipment (19) and lighting equipment (49) through an airtight inlet and outlet system of the power and data cables (50).

Preferably, before being released on the outside of the cabin, the contaminated gas crosses through a HEPA filter on the outside of the cabin and, once filtered, is expelled to the outside environment.

Likewise, transport handles (34) are seen which extend between two of the vertical panels (4,5,6,7) opposite from each other, specifically from the side panels (4,5) and an adjustable platform (35) connected to the base (2) and intended to rest on the support surface (3). The anchors (36) connected to the ceiling (8) are shown.

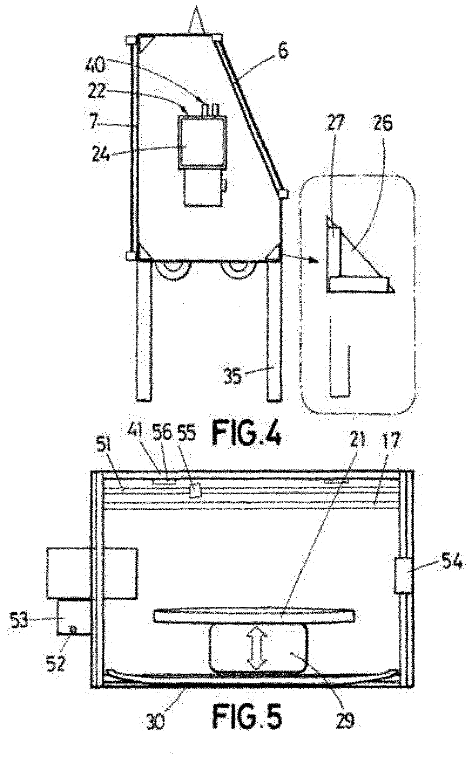

Figure 4 shows a schematic profile view of the safety cabin, according to the present invention, wherein it can be seen that the cabin is equipped with outer light-regulating panels (26) which in the figure shown are photochromic panels and the vertical panels (4,5,6,7) comprise joining elements (27) in the vicinity of the vertices thereof. Specifically, since the photochromic panels have a high weight, the joining elements are projections which are arranged in the vicinity of the base (2), as a square, generating a slot wherein the photochromic panels are introduced.

Figure 5 shows a schematic front view of the inside of the analysis chamber (1), wherein it can be seen that the cabin comprises a rotating support (29) connected to the work tray (21), preferably circular, and to the base (2), which enables the rotation of the work tray (21) and a collection tray (30) resting on the base (2) intended to collect waste of the substance, wherein the collection tray (30) has the edges curved towards the central area thereof in order to prevent the waste and leakage from spilling. The cabin comprises a decontamination liquid tank (53), equipped with a motor not shown in the figure, connected to a tube (51) which extends through the inside of the analysis chamber (1) through which a decontamination liquid is made to pass, provided with suitable openings so that the decontamination liquid comes out in the form of a spray and is introduced into the analysis chamber (1), decontaminating it. It additionally comprises at least one button (52) for turning the system on or off connected to the motor, on the outside of the analysis chamber (1) near the decontamination liquid tank (53), wherein it preferably comprises another button, not shown in the figure, on the inside of the cabin in order to enable the actuation thereof in case of emergency, both from inside the analysis chamber (1) and outside it.

Likewise, a set of sensors (54) for the analysis chamber is seen equipped with at least one accelerometer intended to be connected to a microprocessor which sends the data from the accelerometer to a mobile device. The set of sensors comprises pressure sensors arranged on the inside and outside of the analysis chamber which measure the pressure in order to ensure that the pressure inside the chamber is negative. Additionally, it comprises temperature sensors, moisture sensors, etc. The ultraviolet light decontamination system (55) and the video recording system (56) joined to the frame (16) are seen.

## Claims

1. A portable safety cabin for optical analysis of substance samples, wherein the cabin comprises:
- a partially transparent analysis chamber (1) intended to house the substance, limited by a base (2) intended to rest on a support surface (3), four vertical panels (4,5,6,7) which extend from the base (2) and a ceiling panel (8) connected to the vertical panels (4,5,6,7),
- a work tray (9) resting on the base (2) and housed in the analysis chamber (1) and intended to support the substance;
- a gas inlet valve (10) connected to one of the vertical panels (4,5,6,7) intended to be connected to an external gas source (11) and introduce gas into the analysis chamber (1);
- a gas outlet valve (12) connected to one of the vertical panels (4,5,6,7) through which a contaminated gas is evacuated to the outside of the analysis chamber (1);
- a transfer chamber (48) through which the substance is introduced into the analysis chamber (1), equipped with an opening (13) arranged in one of the vertical panels (4,5,6,7);
- at least two access cavities (15) which cross through one of the vertical panels (4,5,6,7);
- glove (8) housed in the analysis chamber (1) which extends from each access cavity (15);
**characterised in that** it comprises:
- a frame (16) housed in the analysis chamber (1) and resting on the base (2) which supports the vertical panels (4,5,6,7) and the ceiling panel (8), which is equipped with at least one securing bar (17) which extends between two of the side panels (4,5,6,7), opposite from each other, and is parallel to the base (2);
- supports (18) movably connected to the bar (17) intended to support optical analysis equipment (19) and lighting equipment (49).

2. The cabin of claim 1, wherein the vertical panels (4,5,6,7) comprise two side panels (4,5) facing each other, a front panel (6) between the side panels (4,5) and a rear panel (7) facing the front panel (6) wherein the front panel (6) comprises a fixed sector (20) which extends from the base and a door (21) which can be connected to the fixed sector and which enables the opening and airtight closing of the analysis chamber (1).

3. The cabin of claim 2, wherein the door (21) is collapsible with respect to the ceiling panel (8).

4. The cabin of claim 2, wherein the door (21) is completely removable.

5. The cabin of claim 2, comprising at least one lock (43) connected to the door (21) and to one of the side panels (4,5) or to the fixed sector (20) which enables the hermetic closing of the analysis chamber (1).

6. The cabin of claim 1, wherein the frame (16) comprises a first quadrangular tubular support (45) resting on the base (2) and which contacts the four vertical panels (4,5,6,7), at least four vertical bars (46) which extend vertically from the lower bars (45) and are facing the side panels (4,5), and a second quadrangular tubular support (47) which joins the vertical bars (46) to each other and they support the ceiling (8) wherein the securing bar (17) is arranged between two vertical bars (46) and is movable in a longitudinal direction thereof.

7. The cabin of claim 1, wherein the transfer chamber (48) comprises an outer box (22) which extends from the opening (13) towards the outside of the analysis chamber (1) and an inner box (23) which extends from the opening (13) towards the inside the analysis chamber (1), wherein the outer box (22) is equipped with an outer closing lid (24) and the inner box (23) is equipped with an inner closing lid (25).

8. The cabin of claim 1, wherein the vertical panels (4,5,6,7) comprise joining elements (27) in the vicinity of the vertices thereof intended to removably link outer light-regulating panels (26) to the vertical panels.

9. The cabin of claim 8, wherein the joining elements (27) are projections in the vicinity of the base (2) which define a slot intended to house one of the outer panels (26) which is a photochromic panel.

10. The cabin of claim 9, comprising a height-adjustable and rotating support (29) connected to the work tray (21) and to the base (2), which enables the rotation of the work tray (21) with respect to a vertical axis.

11. The cabin of claim 1, comprising a partially curved collection tray (30) resting on the base (2) intended to collect waste or leakage of the substance.

12. The cabin of claim 1, comprising transportation handles (34) which extend from two of the vertical panels (4, 5, 6,7) opposite from each other.

13. The cabin of claim 1, comprising anchors (36) connected to the ceiling panel (8) and safety straps (37) intended to be connected to an external structure (38).

14. The cabin of claim 1, wherein it comprises a set of sensors (54) connected to the analysis chamber equipped with at least one accelerometer intended to be connected to a microprocessor which sends the data from the accelerometer to a mobile device.

15. The cabin of claim 14, wherein the set of sensors (54) additionally comprises a pressure sensor on the inside of the chamber and a pressure sensor on the outside of the chamber intended to be connected to a microprocessor which measures the pressure difference of the sensors and sends the measurement to a mobile device.
